Europäisches Patentamt

European Patent Office

Office européen des brevets

(19)

(11) Veröffentlichungsnummer : **0 384 175 B1**

(12)                    **EUROPÄISCHE PATENTSCHRIFT**

(45) Veröffentlichungstag der Patentschrift :
07.01.93 Patentblatt 93/01

(51) Int. Cl.⁵ : **C09C 1/54,** B01J 19/00

(21) Anmeldenummer : **90101972.9**

(22) Anmeldetag : **01.02.90**

(54) **Verfahren und Vorrichtung zur Herstellung von Acetylenruss.**

(30) Priorität : **14.02.89 DE 3904329**

(43) Veröffentlichungstag der Anmeldung :
**29.08.90 Patentblatt 90/35**

(45) Bekanntmachung des Hinweises auf die
Patenterteilung :
**07.01.93 Patentblatt 93/01**

(84) Benannte Vertragsstaaten :
**BE DE FR GB**

(56) Entgegenhaltungen :
**FR-A- 1 136 025
GB-A- 2 066 228
US-A- 2 704 242**

(73) Patentinhaber : **HOECHST
AKTIENGESELLSCHAFT
Brüningstrasse 50
W-6230 Frankfurt/Main 80 (DE)**

(72) Erfinder : **Kotzian, Michael, Dr.
Sanddornweg 2
W-5042 Erftstadt (DE)**
Erfinder : **Gauss, Michael, Dr.
Schadowstrasse 11
W-6000 Frankfurt (DE)**
Erfinder : **Pottkämper, Siegfried, Dr.
Schaesbergstrasse 11
W-5030 Hürth (DE)**
Erfinder : **Behringer, Hartmut, Dr.
Rotdornweg 6
W-5042 Erftstadt (DE)**
Erfinder : **Heymer, Gero, Dr.
Verstorben
. (DE)**

**Beschreibung**

Die Erfindung betrifft ein Verfahren und eine Vorrichtung zur Herstellung von Acetylenruß durch thermische Zersetzung von Acetylen.

Leitfähige Ruße, insbesondere Acetylenruße, werden in steigenden Mengen zur Trockenbatterie-Herstellung benötigt. Hierbei ist der Hersteller der Trockenbatterien auf eine stets gleichbleibende Rußqualität angewiesen, da seine Rezeptur für die Trockenbatterie-Herstellung auf die eingesetzte Rußqualität abgestimmt ist, um eine gute, gleichbleibende Trockenbatterie-Qualität garantieren zu können.

Bei der Beurteilung der Rußqualität für den Einsatz in Trockenbatterien sind die elektrische Leitfähigkeit und die Flüssigkeitsaufnahmefähigkeit besonders wichtige Kriterien. Die Flüssigkeitsaufnahmefähigkeit des Rußes ist ein wichtiger Parameter für die Bereitung der Kathodenmasse für Trockenbatterien. Diese hängt von den Primärteilchen und in besonderer Weise von der Sekundärstruktur, d.h. seiner dreidimensionalen Kettenstruktur ab. Die elektrische Leitfähigkeit des Rußes ist insbesondere an die Ausprägung und Größe der kristallinen Bereiche mit Graphitstruktur gebunden. Ein Maß dafür ist der $L_c$ -Wert, der die mittlere Dicke der kristallinen Bereiche mit Graphitstruktur in Richtung der kristallographischen c-Achse angibt.

In der GB-2 066 228 A wird ein Verfahren und in der GB-2 066 229 A eine Vorrichtung zur Herstellung von Acetylenruß beschrieben. Bei der Herstellung von Acetylenruß gemäß dem Stand der Technik kann wegen Ruß-Anbackungen an der Innenwand des Spaltrohres keine zeitlich gleichbleibende Ruß-Qualität erhalten werden. Die Ruß-Anbackungen auf der Innenwand des Spaltrohres werden schließlich so dick, daß zur Reinigung der Innenwand von den Ruß-Anbackungen die Produktion unterbrochen werden muß.

Es war daher die Aufgabe gestellt, ein Verfahren und eine Vorrichtung zur Herstellung von Acetylenruß mit stets gleichbleibender Qualität anzugeben. Das erfindungsgemäße Herstellverfahren soll Ruß-Anbackungen an der Innenwand des Spaltrohres weitgehend verhindern.

Gegenstand der Erfindung ist somit ein Verfahren zur Herstellung von Acetylenruß durch thermische Zersetzung von Acetylen, das am Kopf eines Spaltrohres eingeführt wird, das dadurch gekennzeichnet ist, daß ein Inertgasstrom durch eine poröse Ausmauerung in das Spaltrohr kontinuierlich gedrückt wird.

Das Verfahren gemäß der Erfindung kann weiterhin wahlweise auch noch dadurch ausgestaltet sein, daß
a) als Inertgas Stickstoff, Wasserstoff, Edelgas, Kohlenmonoxid, Kohlendioxid oder Gemische dieser Gase verwendet werden;
b) bei der kontinuierlichen Arbeitsweise 1 bis 10 m³/h Inertgas pro m² Ausmauerung in das Spaltrohr gedrückt werden.

Ein weiterer Gegenstand der Erfindung ist eine Vorrichtung zur Herstellung von Acetylenruß in einem Spaltrohr mit obenliegender Acetylenzufuhr, welche dadurch gekennzeichnet ist, daß ein Gasspalt zwischen der Innenwand des Spaltrohres und einer porösen Ausmauerung ausgespart ist, wobei die poröse Ausmauerung mittels eines Metalldrahtgewebes und Ankern am Spaltrohr befestigt ist, und der Gasspalt mit einem Gaszuführungsrohr verbunden ist.

Diese Vorrichtung kann auch noch wahlweise dadurch weitergebildet sein, daß
d) die poröse Ausmauerung eine Dicke von 20 bis 100 mm hat;
e) der Gasspalt eine Breite von 5 bis 20 mm hat.

Die Charakterisierung des Acetylenrußes erfolgt nach folgenden Vorschriften:
1) Mittlerer Teilchendurchmesser
Der mittlere Teilchendurchmesser wird mit Hilfe des Elektronenmikroskops bestimmt.
2) Spezifischer elektrischer Widerstand
Der Ruß wird ohne eine weitere Vorbehandlung in ein nichtleitendes zylindrisches Rohr eingefüllt, das am unteren Ende mit einem vergoldeten, metallischen Stöpsel verschlossen ist. Dieser Stöpsel stellt die eine Elektrode dar. Auf den Ruß wird ein vergoldeter Metallzylinder als zweite Elektrode gelegt. Der Zylinder wird so belastet, daß ein Druck von 6,3 bar auf der Unterseite des Zylinders ansteht. Die Höhe der Rußsäule soll 1,5 cm betragen. Der elektrische Widerstand der Rußsäule wird mit einer Wheatstoneschen Brückenschaltung nach der Gleichung

$$\rho = R \frac{F}{l}$$

berechnet, worin $\rho$ für den spezifischen Widerstand in $\Omega \cdot$ cm, R für den Widerstand in $\Omega$, F für den Querschnitt der Rußsäule in cm² und l für die Höhe der Rußsäule in cm stehen.
3) Absorptionszahl (AS-Zahl)
Die AS-Zahl gibt diejenige Menge eines Wasser/Aceton-Gemisches (9 : 1) in cm³ an, die erforderlich ist, um in einem Rundkolben aus 5 g Ruß eine einzige Kugel zu formen.
4) Freie Feuchte nach 5 und 10 minütiger Naßmischzeit
Bei der Herstellung der Kathodenmasse, z.B. aus 168 g Ruß, 1400 g Naturbraunstein, 360 g NH$_4$Cl, 20 g

ZnO und 575 g 23,5 gewichtsprozentiger $ZnCl_2$-Lösung, in einem Planetenrührwerk wird die Sekundärstruktur des Rußes durch die mechanische Beanspruchung im Mischer teilweise zerstört bzw. verändert. Als Maß für die verbleibende Flüssigkeitsaufnahmefähigkeit nach 5 und 10 min Naßmischzeit wird die "Freie Feuchte" herangezogen. Diese Größe ist die Spannung in mV, die über einen 10 $\Omega$ Fixwiderstand zwischen einer Zinkplatte und 4 g der zu messenden Kathodenmasse auf einer Fläche von 5,4 $cm^2$ und unter dem Druck eines 8 kg schweren Gewichtes gemessen wird. Je höher die Absorptionszahl und je stabiler die Rußstruktur ist, umso weniger Feuchtigkeit wird durch das Anode und Kathode trennende Fließpapier gedrückt und umso niedriger ist die "Freie Feuchte".

5) $L_c$-Wert

Der $L_c$-Wert wird aus den Ergebnissen einer Röntgendiffraktometer-Aufnahme mit $CuK_\alpha$ -Strahlung berechnet.

$$L_c = \frac{K}{\cos \Theta_m \cdot \Theta_{1/2}} \; nm$$

K     Konstante, die alle Umrechnungsfaktoren enthält:
       78,621384

$\Theta_m$    Bandenmaximum in Grad

$\Theta_{1/2}$ Halbwertsbreite bei 1/2 $\Theta_m$ in Grad

In den beigefügten Zeichnungen ist eine Vorrichtung zur Herstellung von Acetylenruß schematisch im Schnitt dargestellt, und zwar zeigt:

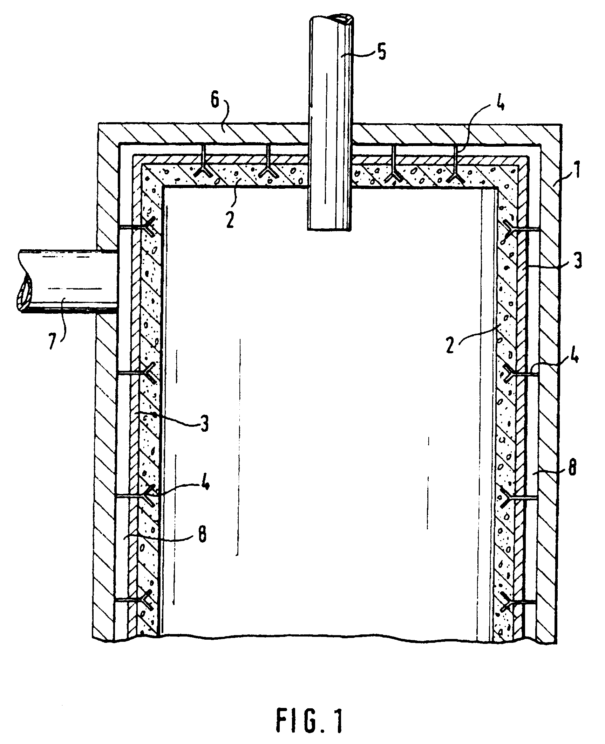

Figur 1 : einen Schnitt durch die Mittelachse des Spaltrohres,

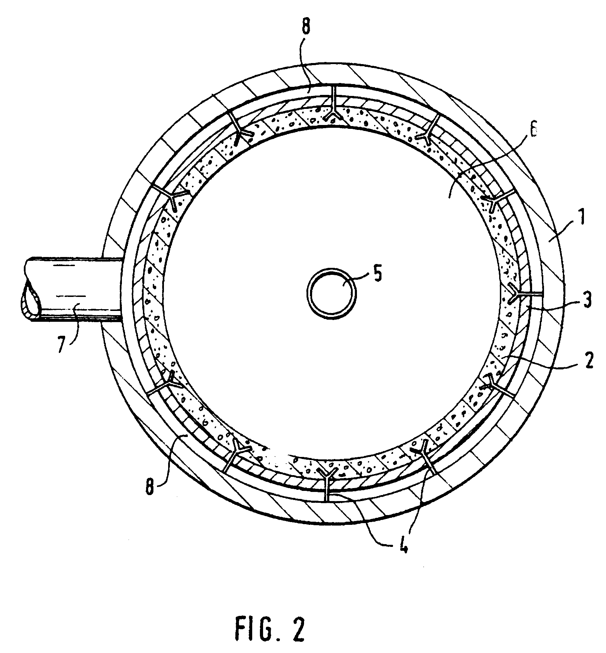

Figur 2 : eine Draufsicht auf das Spaltrohr.

Die erfindungsgemäße Vorrichtung wird anhand der Zeichnungen erläutert:

An der Innenseite des Spaltrohres 1 sind mehrere Anker 4 zur Befestigung eines Metalldrahtgewebes 3 und der porösen Ausmauerung 2 angebracht. Das Spaltrohr 1 ist oben mit dem Deckel 6 verschlossen, der ebenfalls eine poröse Ausmauerung 2 auf einem Metalldrahtgewebe 3 trägt. Zwischen der Innenwand des Spaltrohres 1 und der porösen Ausmauerung 2 ist ein Spalt 8 ausgebildet, der mit Inertgas durch die Gaszuführung 7 beaufschlagbar ist. Das Acetylen wird durch die Acetylenzuführung 5 dosiert.

Beispiel

Über die Acetylenzuführung werden 50 $Nm^3/h$ Acetylen in das heiße Spaltrohr eingeführt. Über die Gaszuführung werden kontinuierlich 8 $m^3/h$ Stickstoff durch den Spalt in das Spaltrohr gedrückt.

Der produzierte Acetylenruß hatte folgende Parameter, die sich auch über einen Zeitraum von 4 Wochen nur unwesentlich veränderten:

```
spezifischer elektrischer Widerstand
(6,3 bar):                              0,55  Ω · cm
mittlerer Teilchendurchmesser:          37    nm
Absorptionszahl:                        44    ml/5 g Ruß
BET-Oberfläche:                         52    m²/g
Lc-Wert:                                7     nm
Freie Feuchte (5 min):                  600   mV
Freie Feuchte (10 min):                 640   mV
```

Die Innenwand der porösen Ausmauerung war nach 4 Wochen noch ohne Ruß-Anbackungen; die poröse Ausmauerung war lediglich leicht verrußt.

## Patentansprüche

1.   Verfahren zur Herstellung von Acetylenruß durch thermische Zersetzung von Acetylen, das am Kopf eines Spaltrohres eingeführt wird, dadurch gekennzeichnet, daß ein Inertgasstrom durch eine poröse Ausmauerung in das Spaltrohr kontinuierlich gedrückt wird.

**2.** Verfahren nach Anspruch 1, <u>dadurch gekennzeichnet</u>, daß als Inertgas Stickstoff, Wasserstoff Edelgas, Kohlenmonoxid, Kohlendioxid oder Gemische dieser Gase verwendet werden.

**3.** Verfahren nach einem der Ansprüche 1 und 2, <u>dadurch gekennzeichnet</u>, daß bei der kontinuierlichen Arbeitsweise 1 bis 10 $m^3$/h Inertgas pro $m^2$ Ausmauerung in das Spaltrohr gedrückt werden.

**4.** Vorrichtung zur Herstellung von Acetylenruß in einem Spaltrohr mit obenliegender Acetylenzufuhr, <u>dadurch gekennzeichnet</u>, daß ein Gasspalt (8) zwischen der Innenwand des Spaltrohres (1) und einer porösen Ausmauerung (2) ausgespart ist, wobei die poröse Ausmauerung (2) mittels eines Metalldrahtgewebes (3) und Ankern (4) am Spaltrohr (1) befestigt ist, und der Gasspalt (8) mit einem Gaszuführungsrohr (7) verbunden ist.

**5.** Vorrichtung nach Anspruch 4, <u>dadurch gekennzeichnet</u>, daß die poröse Ausmauerung (2) eine Dicke von 20 bis 100 mm hat.

**6.** Vorrichtung nach Anspruch 4 oder 5, <u>dadurch gekennzeichnet</u>, daß der Gasspalt (8) eine Breite von 5 bis 20 mm hat.

## Claims

**1.** A process for preparing acetylene black by the thermal decomposition of acetylene introduced at the top of a cracking tube, which comprises continuously forcing a stream of inert gas into the cracking tube through a porous lining.

**2.** The process as claimed in claim 1, wherein the inert gas used is nitrogen, hydrogen, noble gas, carbon monoxide, carbon dioxide or a mixture thereof.

**3.** The process as claimed in either of claims 1 and 2, wherein from 1 to 10 $m^3$/h of inert gas are forced into the cracking tube per $m^2$ of lining in a continuous procedure.

**4.** Apparatus for preparing acetylene black in a cracking tube with an acetylene supply at the top, wherein there is a gap (8) between the inner surface of the cracking tube (1) and a porous lining (2), the porous lining (2) being attached to the cracking tube (1) by means of a metal wire fabric (3) and anchors (4) and the gap (8) being connected to a gas supply pipe (7).

**5.** Apparatus as claimed in claim 4, wherein the porous lining (2) has a thickness of from 20 to 100 mm.

**6.** Apparatus as claimed in claim 4 or 5, wherein the gap (8) has a width of from 5 to 20 mm.

## Revendications

**1.** Procédé de fabrication du noir d'acétylène par décomposition thermique de l'acétylène qui est introduit à la tête d'un tube de craquage, caractérisé en ce qu'un courant de gaz inerte est introduit sous pression en continu dans le tube de craquage à travers un garnissage poreux.

**2.** Procédé selon la revendication 1, caractérisé en ce que l'on utilise comme gaz inerte l'azote, l'hydrogène, un gaz noble, le monoxyde de carbone, le dioxyde de carbone ou des mélanges de ces gaz.

**3.** Procédé selon l'une des revendications 1 et 2, caractérisé en ce que, en fonctionnement continu, 1 à 10 $m^3$/h de gaz inerte par $m^2$ de garnissage sont introduits sous pression dans le tube de craquage.

**4.** Dispositif de fabrication du noir d'acétylène dans un tube de craquage muni d'une amenée d'acétylène à la partie supérieure, caractérisé en ce qu'il est prévu un interstice pour les gaz (8) entre la paroi interne du tube de craquage (1) et un garnissage poreux (2), le garnissage poreux (2) étant fixé au tube de craquage (1) à l'aide d'une toile métallique (3) et de pièces d'ancrage (4) et l'interstice pour les gaz (8) étant relié à un tube d'amenée de gaz (7).

**5.** Dispositif selon la revendication 4, caractérisé en ce que le garnissage poreux (2) a une épaisseur de 20

4

à 100 mm.

6. Dispositif selon la revendication 4 ou 5, caractérisé en ce que l'interstice pour les gaz (8) a une largeur de 5 à 20 mm.

FIG. 1

FIG. 2